# EUROPÄISCHE PATENTSCHRIFT

(11) **EP 1 154 235 B1**
(45) Veröffentlichungstag und Bekanntmachung des Hinweises auf die Patenterteilung: **21.06.2006**
(21) Anmeldenummer: 01108576.8
(22) Anmeldetag: 05.04.2001
(51) Int. Cl.: G01C 21/36

(54) **Zielführungsanzeige für Navigationssysteme**
Destination guidance display for navigation systems
Dispositif d'affichage de guidage de destination pour systèmes de navigation

(30) Priorität: 13.05.2000 DE 10023530
(43) Veröffentlichungstag der Anmeldung: 14.11.2001
(73) Patentinhaber: SIEMENS AKTIENGESELLSCHAFT, 80333 München (DE)
(72) Erfinder: Hulverscheidt, Jürgen, 44229 Dortmund (DE); Schott, Joachim, 36277 Schenklengsfeld (DE)

(56) Entgegenhaltungen:
- DE-A- 19 919 139
- GB-A- 2 260 210
- US-A- 5 323 321

## Beschreibung

Die Erfindung betrifft eine Zielführungsanzeige für ein Navigationssystem eines Straßenfahrzeugs, die als elektrooptische Anzeige ausgebildet und von einem Zielführungsrechner ansteuerbar ist und durch die mittels Symbolen eine momentan befahrene Richtung und eine nach einem Abbiegepunkt zu fahrende Richtung relativ zueinander angezeigt werden. Weiterhin betrifft die Erfindung ein Verfahren zur Darstellung von Zielführungsinformationen.

Bei Navigationssystemen erfolgt die Zielführung durch Ausgabe von Zielführungsinformationen über eine akustische oder eine optische Ausgabeeinheit. Bei der optischen Ausgabe von Zielführungsinformationen hat sich insbesondere eine Pfeildarstellung bewährt, über die dem Fahrer angezeigt wird, in welche Richtung er beim nächsten Abbiegepunkt abbiegen muss. Für den Fahrer ist es insbesondere von Bedeutung neben dieser reinen Abbiegeinformation auch einen Hinweis zu bekommen, ob dieses Abbiegemanöver unmittelbar bevorsteht oder erst in einer größeren Entfernung erfolgen muss. Hierzu kann beispielsweise die Entfernung bis zum Abbiegepunkt direkt angegeben werden. Diese Angabe hat jedoch den Nachteil, dass sie vom Fahrer während der Fahrt nur schlecht erfasst werden kann. Aus der EP 0 542 331 A1 und der DE 44 12 859 C2 sind Zielführungsanzeigen bekannt, bei denen ein Entfernungshinweis optisch in ein Zielführungssymbol integriert ist. Nach der EP 0 542 331 A1 wird der nächste Abbiegepunkt, beispielsweise ein Kreisverkehr, im Detail dargestellt und die bereits gefahrene und die noch zu fahrende Strecke werden durch unterschiedliche Farben angezeigt. Erfolgt diese Darstellung maßstabsgerecht, so kann der Fahrer etwa die Entfernung bis zum Abbiegepunkt abschätzen. Diese Darstellungsweise ist jedoch nur dann geeignet, wenn sich das Fahrzeug bereits in unmittelbarer Nähe des Abbiegepunktes befindet, da nur dann aus der geometrischen Ausdehnung des Abbiegepunktes und der Position des Fahrzeuges auf die Entfernung zum Abbiegepunkt geschlossen werden kann. Aus der DE 44 12 859 C1 ist eine Zielführungsanzeige bekannt, bei der ein Balkendiagramm den Schaft eines Richtungspfeils bildet, wobei der der Pfeilspitze entfernteste angesteuerte Balken die momentane Entfernung zum Abbiegepunkt darstellt und mit Verringerung dieser Entfernung zur Pfeilspitze hinwandert. Weiterhin ist aus dem Buch von Stefan Schlott: Fahrzeugnavigation: Routenplanung, Positionsbestimmung, Zielführung, Verlag Moderne Industrie, 1997 aus Abbildung 18 bekannt, in Abhängigkeit von der Entfernung des Fahrzeugs von einem Abbiegepunkt unterschiedliche Zielführungshinweise auszugeben. Hierbei wird unterschieden zwischen einer Bestätigung einer eingeschlagenen Richtung, einem Vorhinweis und einem Hinweis. Der Vorhinweis setzt sich aus zwei getrennten Pfeilen zusammen, lässt jedoch keinen Hinweis auf die Entfernung zum Abbiegepunkt zu.

Weiterhin ist aus der GB-A-2 260 210 eine Zielführungsanzeige bekannt, bei der die Länge eines Symbols, das die vor dem Abbiegepunkt zu fahrende Strecke symbolisiert, mit Annäherung an den Abbiegpunkt verkleinert wird.

Hier setzt nun die vorliegende Erfindung ein, deren Aufgabe es ist, eine weitere Zielführungsanzeige für ein Navigationssystem anzugeben, mit der auf optische Weise dem Fahrer ein Eindruck hinsichtlich der Entfernung bis zum nächsten Abbiegepunkt gegeben wird. Insbesondere soll diese Zielführungsanzeige für Vorhinweise einsetzbar sein. Eine weitere Aufgabe besteht darin, ein entsprechendes Verfahren zur Darstellung von Zielführungsinformationen anzugeben.

Die erstgenannte Aufgabe wird bei einem gattungsgemäßen Zielführungssystem dadurch gelöst, dass die Symbole für die momentan befahrene Richtung und die nach dem Abbiegepunkt zu fahrende Richtung in Abhängigkeit von der Entfernung bis zum Abbiegepunkt in ihrer relativen Größe zueinander derart veränderbar sind, dass die Größe des Symbols, das die nach dem Abbiegepunkt zu fahrende Richtung kennzeichnet, mit Annäherung an den Abbiegepunkt zunimmt. Hierdurch entsteht für den Fahrer auf der Anzeigeeinheit der optische Eindruck, dass der Abbiegepunkt näher kommt. Dies kann dadurch erreicht werden, dass entweder nur eines der beiden Symbole in seiner Größe verändert wird, während das andere Symbol hinsichtlich seiner Größe unverändert bleibt, oder dadurch, dass beide Symbole in ihrer Größe verändert werden. Vorzugsweise werden dabei die Größe eines oder beider Symbole in zwei Dimensionen verändert, d. h. sowohl die Länge als auch die Breite des Symbols werden verändert. Hierdurch ergibt sich eine besonders deutliche Darstellung der Änderung.

In einer besonderen Ausführungsform ist vorgesehen, dass die Symbole zusätzlich in ihrem relativen Abstand zueinander veränderbar sind. Hierdurch kann der Effekt des Annäherns an den Kreuzungspunkt bei Blick auf die Zielführungsanzeige noch deutlich verstärkt werden.

Vorzugsweise handelt es sich bei mindestens einem der Symbole um eine Pfeildarstellung, wobei die Pfeildarstellung insbesondere für die nach dem Abbiegepunkt zu fahrende Richtung bevorzugt wird. Hierdurch ergibt sich ein eindeutiger Hinweis auf die einzuschlagende Richtung. Die beiden Symbole müssen auch nicht völlig räumlich voneinander getrennt angeordnet sein, vielmehr können sie auch dicht beieinander oder sogar miteinander verbunden angeordnet sein. Gerade in letzterem Fall wird eine farbliche Unterscheidung der Symbole bevorzugt, da dann eine schnelle Trennung des Symbols für die momentan befahrene Richtung und die nach dem Abbiegepunkt zu fahrende Richtung erreicht werden kann.

Eine erfindungsgemäßes Verfahren zur Darstellung von Zielführungsinformationen eines Navigationssystems für Straßenfahrzeuge auf einer elektrooptischen Anzeige, die von einem Zielführungsrechner angesteuert wird und auf der mittels Symbolen eine momentan befahrene Richtung und eine nach einem Abbiegepunkt zu fahrende Richtung relativ zueinander angezeigt werden, wobei die Entfernung bis zum Abbiegepunkt bestimmt wird, ist dadurch gekennzeichnet, dass das Symbol für die nach dem Abbiegepunkt zu fahrende Richtung mit zunehmender Annäherung an den Abbiegepunkt vergrößert wird.

Die Erfindung wird nachfolgend anhand der Zeichnung und der Ausführungsbeispiele näher beschrieben.

Es zeigen:
- Figur 1:: eine erste erfindungsgemäße Zielführungsanzeige
- Figur 2:: eine zweite erfindungsgemäße Zielführungsanzeige
- Figur 3:: eine dritte erfindungsgemäße Zielführungsanzeige

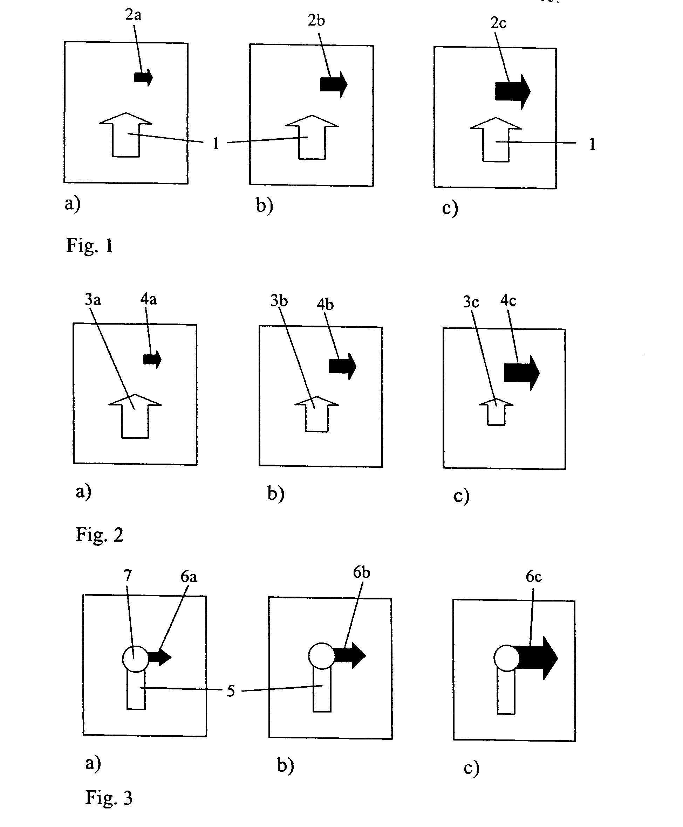

Figur 1 zeigt eine erste erfindungsgemäße Zielführungsanzeige mit drei unterschiedlichen Darstellungen für drei unterschiedliche Entfernungen bis zum Abbiegepunkt. Bei diesen Zielführungsanzeigen handelt es sich insbesondere um einen Vorhinweis, so dass bei Unterschreiten einer gewissen vorgegebenen Mindestentfernung bis zum Abbiegepunkt auf eine detailliertere Darstellung des Abbiegepunktes und der einzuschlagenden Fahrtrichtungen umgeschaltet wird, wie sie beispielsweise aus dem zuvor genannten Stand der Technik bekannt ist. Bei der Darstellung nach Figur 1 a befindet sich das Fahrzeug noch am weitesten vom Abbiegepunkt entfernt, während es sich bei der Darstellung nach Figur 1 c von den drei dargestellten Situationen am nächsten am Abbiegepunkt befindet. Durch einen Pfeil 1 wird die momentan befahrene Richtung des Fahrzeugs angezeigt. Der Pfeil 1 bleibt hinsichtlich seiner Größe und Position unabhängig von der Entfernung zum nächsten Abbiegepunkt. Demgegenüber ist der Pfeil 2, der die Fahrtrichtung nach dem nächsten Abbiegepunkt angibt, in seiner Größe und Position relativ zum Pfeil 1 veränderbar. In Figur 1 a, in der noch die weiteste Entfernung zum Abbiegepunkt der dargestellten Situationen vorliegt, ist der Pfeil 2 a kleiner und weiter entfernt vom Pfeil 1 angeordnet als in den Figuren 1 b und 1 c, die spätere Darstellungen wiedergeben. Mit zunehmender Annäherung des Fahrzeugs an dem Abbiegepunkt wird der Pfeil 2 vergrößert und rückt zudem näher an den Pfeil 1 heran. Durch diese Darstellungsweise wird dem Fahrer optisch die Annäherung an den Abbiegepunkt signalisiert. Durch die unterschiedliche Darstellung der Pfeile 1 und 2 kann der Fahrer zudem auf einfache Weise die momentan gefahrene Richtung und die nach dem nächsten Abbiegepunkt zu fahrende Richtung unterscheiden.

Figur 2 zeigt eine zweite erfindungsgemäße Zielführungsanzeige, wobei die in den Figuren 2 a, b und c dargestellten Situationen wiederum wie bei Figur 1 unterschiedlichen Entfernungen zum Abbiegepunkt entsprechen. Bei dieser Ausführungsform wird nun nicht nur die Größe des Pfeils 4 für die nach dem Abbiegepunkt zu fahrende Richtung, sondern auch die Größe des Pfeils 3 für die momentan befahrene Richtung geändert.

Während der Pfeil 4 mit abnehmender Entfernung zum Abbiegepunkt wächst, wird der Pfeil 3 entsprechend kleiner.

In Figur 3 ist eine dritte Ausführungsform dargestellt, bei der die Symbole für die momentan befahrene Richtung und die nach dem nächsten Abbiegepunkt zu fahrende Richtung eng zusammengerückt sind und über das den Abbiegepunkt kennzeichnende Symbol 7 miteinander verknüpft sind. Die momentan zu fahrende Richtung wird hierbei durch einen Balken 5 gekennzeichnet, der in seiner Größe und Position unverändert bleibt. Die nach dem Abbiegepunkt zu fahrende Richtung wird durch den Pfeil 6 gekennzeichnet, dessen Größe mit abnehmender Entfernung zum Abbiegepunkt zunimmt.

Die Erfindung wurde anhand von drei Ausführungsbeispielen näher beschrieben, ohne dass sie auf deren konkrete Ausgestaltung beschränkt ist.

## Patentansprüche

1. Zielführungsanzeige für ein Navigationssystem eines Straßenfahrzeugs, die als elektrooptische Anzeige aus gebildet und von einem Zielführungsrechner ansteuerbar ist und durch die mittels Symbolen eine momentan befahrene Richtung (1, 3a, 3b, 3c, 5) und eine nach einem Abbiegepunkt zu fahrende Richtung (2a-2c, 4a-4c, 6a-6c) relativ zueinander angezeigt werden, **dadurch gekennzeichnet, dass** die Symbole für die momentan befahrene Richtung (1, 3a, 3b, 3c, 5) und die nach dem Abbiegepunkt zu fahrende Richtung (2a-2c, 4a-4c, 6a-6c) in Abhängigkeit von der Entfernung bis zum Abbiegepunkt in ihrer relativen Größe zueinander derart veränderbar sind, dass die Größe des Symbols (2a-2c, 4a-4c, 6a-6c), das die nach dem Abbiegepunkt zu fahrende Richtung kennzeichnet, mit Annäherung an den Abbiegepunkt zunimmt.

2. Zielführungsanzeige nach Anspruch 1, **dadurch gekennzeichnet, dass** die Symbole zusätzlich in ihrem relativen Abstand zueinander veränderbar sind.

3. Zielführungsrichtung nach einem der vorhergehenden Ansprüche, **dadurch gekennzeichnet, dass** die Größe eines Symbols in zwei Dimensionen veränderbar ist.

4. Zielführungsanzeige nach einem der vorhergehenden Ansprüche, **dadurch gekennzeichnet, dass** die Veränderung der relativen Größe und des Abstands der Symbole durch Veränderung der Größe und Position des Symbols für die nach dem Abbiegepunkt zu fahrende Richtung erzielbar ist.

5. Zielführungsanzeige nach einem der vorhergehenden Ansprüche, **dadurch gekennzeichnet, dass** es sich bei mindestens einem der Symbole um einen Pfeil handelt

6. Zielführungsanzeige nach einem der vorhergehenden Ansprüche, **dadurch gekennzeichnet, dass** die Zielführungsanzeige eine Flüssigkristallanzeige ist.

7. Zielführungseinrichtung nach einem der vorhergehenden Ansprüche, **dadurch gekennzeichnet, dass** die Symbole farblich unterschiedlich ausgebildet sind.

8. Verfahren zur Darstellung von Zielführungsinformationen eines Navigationssystems für Straßenfahrzeuge auf einer elektrooptischen Anzeige, die von einem Zielführungsrechner angesteuert wird und auf der mittels Symbolen eine momentan befahrene Richtung (1, 3a, 3b, 3c, 5) und eine nach einem Abbiegepunkt zu fahrende Richtung (2a-2c, 4a-4c, 6a-6c) relativ zueinander angezeigt werden, wobei die Entfernung bis zu dem Abbiegepunkt bestimmt wird, **dadurch gekennzeichnet, dass** das Symbol für die nach dem Abbiegepunkt zu fahrende Richtung (2a-2c, 4a-4c, 6a-6c) mit zunehmender Annäherung an den Abbiegepunkt vergrößert wird.

9. Verfahren nach Anspruch 8, **dadurch gekennzeichnet, dass** die Symbole in Abhängigkeit von der Entfernung bis zum Abbiegepunkt zusätzlich in ihrem relativen Abstand zueinander verändert werden.

10. Verfahren nach Anspruch 8 oder 9, **dadurch gekennzeichnet, dass** die Größe und Position des Symbols (2a-2c, 4a-4c, 6a-6c) für die nach dem Abbiegepunkt zu fahrende Richtung in Abhängigkeit von der Entfernung zum Abbiegepunkt verändert wird und die Größe und Position des Symbols (1, 3a, 3b, 3c, 5) für die momentan befahrene Richtung unabhängig von der Entfernung zum Abbiegepunkt ist.

## Claims

1. Routing display for a navigation system in a road vehicle, which is in the form of an electro-optical display and can be driven by a routing computer, and which is able to use symbols to display a direction (1, 3a, 3b, 3c, 5) of current travel and a direction (2a-2c, 4a-4c, 6a-6c) which is to be taken after a turn-off point relative to one another, **characterized in that** the symbols for the direction (1, 3a, 3b, 3c, 5) of current travel and the direction (2a-2c, 4a-4c, 6a-6c) which is to be taken after the turn-off point can be changed, in terms of their sizes relative to one another, on the basis of the distance to the turn-off point such that the size of the symbol (2a-2c, 4a-4c, 6a-6c) marking the direction which is to be taken after the turn-off point increases as the turn-off point is approached.

2. Routing display according to Claim 1, **characterized in that** the symbols can additionally be changed in terms of their relative distance from one another.

3. Routing display according to one of the preceding claims, **characterized in that** the size of a symbol can be changed in two dimensions.

4. Routing display according to one of the preceding claims, **characterized in that** the relative size and the distance of the symbols can be changed by changing the size and position of the symbol for the direction which is to be taken after the turn-off point.

5. Routing display according to one of the preceding claims, **characterized in that** at least one of the symbols is an arrow.

6. Routing display according to one of the preceding claims, **characterized in that** the routing display is a liquid crystal display.

7. Routing display according to one of the preceding claims, **characterized in that** the symbols have different colours.

8. Method for showing routing information from a navigation system for road vehicles on an electro-optical display which is driven by a routing computer and on which a direction (1, 3a, 3b, 3c, 5) of current travel and a direction (2a-2c, 4a-4c, 6a-6c) which is to be taken after a turn-off point are displayed relative to one another using symbols, with the distance to the turn-off point being determined, **characterized in that** the symbol for the direction which is to be taken after the turn-off point becomes enlarged as the turn-off point is increasingly approached.

9. Method according to Claim 8, **characterized in that** the symbols are additionally changed in terms of their relative distance from one another on the basis of the distance to the turn-off point.

10. Method according to Claim 8 or 9, **characterized in that** the size and position of the symbol (2a-2c, 4a-4c, 6a-6c) for the direction which is to be taken after the turn-off point are changed on the basis of the distance to the turn-off point, and the size and position of the symbol (1, 3a, 3b, 3c, 5) for the direction of current travel are independent of the distance to the turn-off point.

## Revendications

1. Dispositif d'affichage du guidage vers la destination destiné à un système de navigation d' un véhicule routier, qui est conçu comme dispositif d'affichage électro-optique, qui peut être commandé par un calculateur de guidage vers la destination et avec lequel on peut afficher, au moyen de pictogrammes et relativement l'une par rapport à l'autre, une direction (1, 3a, 3b, 3c, 5) que l' on est justement en train de suivre et une direction (2a - 2c, 4a - 4c, 6a - 6c) à prendre après un point de changement de direction, **caractérisé en ce que** la grandeur relative l'un par rapport à l'autre des pictogrammes correspondant à la direction (1, 3a, 3b, 3c, 5) que l'on est justement en train de suivre et à la direction (2a - 2c, 4a - 4c, 6a - 6c) à prendre après le point de changement de direction peuvent varier, en fonction de la distance à parcourir jusqu'au point de changement de direction, de telle sorte que la grandeur du pictogramme (2a - 2c, 4a - 4c, 6a - 6c), qui caractérise la direction à prendre après le point de changement de direction, augmente au fur et à mesure que le point de changement de direction se rapproche.

2. Dispositif d'affichage du guidage vers la destination selon la revendication 1 **caractérisé en ce que** l'écart relatif entre les pictogrammes peut, en supplément, varier.

3. Dispositif d'affichage du guidage vers la destination selon l'une des revendications précédentes **caractérisé en ce que** la grandeur d'un pictogramme peut être modifiée en deux dimensions.

4. Dispositif d'affichage du guidage vers la destination selon l'une des revendications précédentes **caractérisé en ce que** la modification de la grandeur relative des pictogrammes et de l'écart entre les pictogrammes peut être obtenue par une modification de la grandeur et de la position du pictogramme correspondant à la direction à prendre après le point de changement de direction.

5. Dispositif d'affichage du guidage vers la destination selon l'une des revendications précédentes **caractérisé en ce que** l'un au moins des pictogrammes est une flèche.

6. Dispositif d'affichage du guidage vers la destination selon l'une des revendications précédentes **caractérisé en ce que** le dispositif d'affichage du guidage vers la destination est un affichage à cristaux liquides.

7. Dispositif d'affichage du guidage vers la destination selon l'une des revendications précédentes **caractérisé en ce que** les pictogrammes sont conçus avec des colorations différentes.

8. Procédé permettant de représenter des informations relatives au guidage vers la destination dans un système de navigation pour véhicules routiers sur un affichage électro-optique commandé par ordinateur de guidage vers la destination et sur lequel, au moyen de pictogrammes, sont indiquées, relativement l'une par rapport à l'autre, une direction (1, 3a, 3b, 3c, 5) que l'on est justement en train de suivre et une direction (2a - 2c, 4a - 4c, 6a - 6c) à prendre après un point de changement de direction, où la distance à parcourir jusqu'au point de changement de direction est déterminée, **caractérisé en ce que** le pictogramme correspondant à la direction (2a - 2c, 4a - 4c, 6a - 6c) à prendre après le point de changement de direction devient de plus en plus grand au fur et à mesure que le point de changement de direction se rapproche.

9. Procédé selon la revendication 8 **caractérisé en ce que** l'écart relatif entre les pictogrammes est modifié en supplément en fonction de la distance à parcourir jusqu'au point de changement de direction.

10. Procédé selon la revendication 8 ou 9 **caractérisé en ce que** la grandeur et la position du pictogramme (2a - 2c, 4a - 4c, 6a - 6c) correspondant à la direction à prendre après le point de changement de direction sont modifiées en fonction de la distance à parcourir jusqu'au point de changement de direction et que la grandeur et la position du pictogramme (1, 3a, 3b, 3c, 5) correspondant à la direction que l'on est justement en train de suivre est indépendante de la distance à parcourir jusqu'au point de changement de direction.
